# EUROPEAN PATENT APPLICATION

(11) **EP 4 147 982 A1**
(43) Date of publication of application: **15.03.2023**
(21) Application number: 22191715.6
(22) Date of filing: 23.08.2022
(51) Int. Cl.: B64G 6/00, A62B 17/00

(54) **OFFSET ARMOR FOR AN ATMOSPHERIC SUIT**

(30) Priority: 13.09.2021 US 202117473452
(71) Applicant: Hamilton Sundstrand Corporation, Charlotte, NC 28217-4578 (US)
(72) Inventor: KELFORD, Bryce Tyler, San Diego, 92111 (US); SANZ MARTINEZ, Pablo T., San Diego, 92120 (US)
(74) Representative: Dehns

(57) **Abstract**

Armor attached to a component of an atmospheric suit that maintains a specific atmosphere within the suit includes an armor component (210) to absorb a predefined amount of energy. The armor also includes one or more standoffs (230) to attach the armor component (210) to the component such that all or most of the armor component (210) is offset from the component.

## Description

### BACKGROUND

Exemplary embodiments pertain to the art of space suits and, in particular, to offset armor for an atmospheric suit.

An atmospheric suit (e.g., space suit) includes several components that, together, provide a habitable environment (e.g., for an astronaut in deep space). For example, the hard upper torso (HUT) forms a rigid enclosure about the upper body of the wearer and provides pressure containment for this part of the body. The HUT acts as a hub with structural attachment points for the arms, lower torso assembly (LTA), chest-mounted display and control modules, and primary life support subsystem (PLSS). The helmet attaches to an upper neck ring of the HUT. The HUT plays a load-bearing role by providing structural support to carry the PLSS, which is mounted to the back of the HUT, and the displays and control module (DCM), which is attached to the front of the HUT. The PLSS provides breathable oxygen, regulates pressure within the space suit, removes carbon dioxide and humidity, controls temperature, and may include communication equipment. In order to maintain pressure, the atmospheric suit must withstand an impact resulting from an object striking the suit or from a fall.

### BRIEF DESCRIPTION

In one exemplary embodiment, armor attached to a component of an atmospheric suit that maintains a specific atmosphere within the suit includes an armor component to absorb a predefined amount of energy. The armor also includes one or more standoffs to attach the armor component to the component such that all or most of the armor component is offset from the component.

In addition to one or more of the features described herein, the armor component is a thermoplastic or a thermosetting polymer.

In addition to one or more of the features described herein, the armor component is formed as two or more layers that are stacked or that are separated by a gap therebetween, or the armor component is formed as a laminate.

In addition to one or more of the features described herein, the component that the armor component is attached to is a hard upper torso (HUT), rear entry door (RED), or helmet.

In addition to one or more of the features described herein, two or more of the one or more standoffs attach the armor component such that all of the armor component is offset from the component.

In addition to one or more of the features described herein, the two or more of the one or more standoffs at corresponding two or more locations of the armor component restrict axial movement of the armor component toward or away from the component while allowing lateral movement of the armor component offset from the component, and an impact of the atmospheric suit at the armor causes axial deflection of the armor component toward the component.

In addition to one or more of the features described herein, the armor also includes an assembly of the armor components, wherein one of the armor components is attached to the component by the one or more standoffs at one side and partially overlaps another of the armor components at another side.

In addition to one or more of the features described herein, the assembly of the armor components is formed as a partially overlapping stack of the armor components.

In addition to one or more of the features described herein, the armor component absorbs the predefined amount of energy based on a material and thickness of the armor component.

In addition to one or more of the features described herein, the predefined amount of energy is determined according to a material, geometry, mass, and velocity of an expected impactor.

In another exemplary embodiment, a method of assembling armor for attachment to a component of an atmospheric suit that maintains a specific atmosphere within the suit includes obtaining an armor component to absorb a predefined amount of energy. The method also includes arranging one or more standoffs to attach the armor component to the component such that all or most of the armor component is offset from the component.

In addition to one or more of the features described herein, the armor component is a thermoplastic or a thermosetting polymer.

In addition to one or more of the features described herein, the obtaining the armor component includes obtaining the armor component formed as two or more layers that are stacked or that are separated by a gap therebetween or obtaining the armor component formed as a laminate.

In addition to one or more of the features described herein, the arranging the one or more standoffs includes attaching the one or more standoffs to a hard upper torso (HUT), rear entry door (RED), or helmet.

In addition to one or more of the features described herein, the arranging the one or more standoffs includes arranging two or more of the one or more standoffs to attach the armor component such that all of the armor component is offset from the component.

In addition to one or more of the features described herein, the arranging the two or more of the one or more standoffs includes disposing the two or more of the one or more standoffs at corresponding two or more locations of the armor component to restrict axial movement of the armor component toward or away from the component while allowing lateral movement of the armor component offset from the component, and an impact of the atmospheric suit at the armor causes axial deflection of the armor component toward the component.

In addition to one or more of the features described herein, the method also includes forming an assembly of the armor components by attaching one of the armor components to the component via the one or more standoffs at one side and partially overlapping another of the armor components at another side.

In addition to one or more of the features described herein, the forming the assembly of the armor components includes forming a partially overlapping stack of the armor components.

In addition to one or more of the features described herein, the obtaining the armor component includes selecting a material and thickness of the armor component to absorb the predefined amount of energy.

In addition to one or more of the features described herein, the method also includes determining the predefined amount of energy according to a material, geometry, mass, and velocity of an expected impactor.

### BRIEF DESCRIPTION OF THE DRAWINGS

The following descriptions should not be considered limiting in any way. With reference to the accompanying drawings, like elements are numbered alike:
FIG. 1 depicts components of an atmospheric suit that includes armor according to one or more embodiments;
FIG. 2A shows armor that is attached to a component of an atmospheric suit according to one or more embodiments;
FIG. 2B is a cross-sectional view of the armor through A-A according to an exemplary embodiment;
FIG. 2C is a cross-sectional view of the armor through A-A according to an exemplary embodiment;
FIG. 2D is a cross-sectional view of the armor through A-A according to an exemplary embodiment; and
FIG. 3 shows an exemplary armor that is formed as an assembly of armor components according to one or more embodiments.

### DETAILED DESCRIPTION

A detailed description of one or more embodiments of the disclosed apparatus and method are presented herein by way of exemplification and not limitation with reference to the Figures.

As previously noted, an atmospheric suit provides a habitable environment for the wearer. The atmospheric suit includes a number of components. For example, the HUT maintains pressure within the suit and must also withstand impact, because a breach of the HUT can result in loss of pressure in the suit and may present a danger to the wearer. The atmospheric suit also includes a rear entry door (RED) that facilitates donning and doffing the HUT from the back. The HUT must be thin enough and light enough (low mass) not to impede the mobility of the wearer of the suit. Thus, the HUT may be fabricated from fiberglass or another rigid material that is not bulky. However, this may make the HUT insufficient to withstand a fall or impact (e.g., of a micrometeoroid in deep space). Other components of the atmospheric suit, such as the helmet, must also withstand a fall or impact in order to maintain a habitable environment for the wearer.

Embodiments detailed herein relate to offset armor for an atmospheric suit. While a space suit is discussed, in particular, for explanatory purposes, the components that are shown and discussed may also be part of another type of atmospheric suit (i.e., a suit that maintains a specific atmosphere within it). For example, in addition to being used in deep space (e.g., in an extravehicular mobility unit or space suit), the atmospheric suit may be used in underwater (e.g., in an atmospheric diving suit), earth-based (e.g., in a hazmat suit or contamination suit), high-altitude (e.g., in a flight suit), and sub-surface applications. The armor that is detailed herein, according to one or more embodiments, may be used to protect some or all of the components of the atmospheric suit in any of these environments.

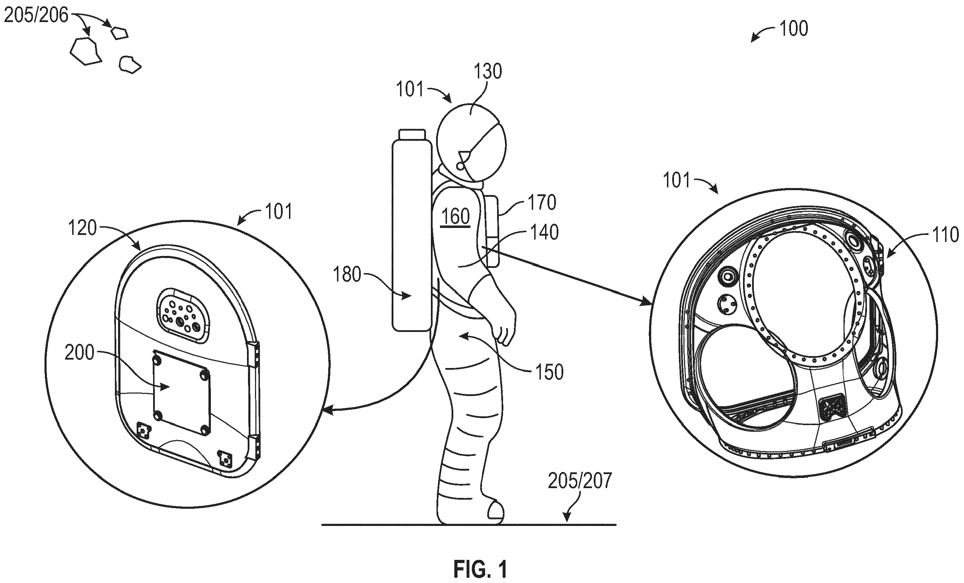

FIG. 1 depicts components 101 of an atmospheric suit 100 that includes armor 200 according to one or more embodiments. The HUT 110 and the rear entry door (RED) 120 below the outer layer of the atmospheric suit 100 are shown. As previously noted, the RED 120 facilitates donning and doffing the HUT 110 from the back. The HUT 110 acts as an attachment point for other components 101 of the atmospheric suit 100. For example, the HUT 120 includes a neck ring to which the helmet 130 is attached. The arms 140 and lower torso assembly (LTA) 150 are also components 101 that attach to the HUT 110, along with a displays and control module (DCM) 170 and primary life support subsystem (PLSS) 180. The HUT 110 is covered by a thermal micrometeoroid garment (TMG) 160.

The RED 120 is shown with armor 200 affixed. This armor 200 is further detailed, and armor, according to one or more embodiments, may be attached to any or all of the components 101 of the atmospheric suit 100. The armor 200 may absorb some or all of the impact from impactors 205 that impact the atmospheric suit 100. Two exemplary impactors 205 are illustrated in FIG. 1. Micrometeors 206 may strike one or more components 101 of the atmospheric suit 100. The person wearing the atmospheric suit 100 may fall on the surface 207, which then acts as another type of impactor 205. The armor 200 attached to one or more components 101 of the atmospheric suit 100 may mitigate the impact and prevent a rupture of the atmospheric suit that results in loss of pressure and, thus, loss of the life support functionality of the atmospheric suit 100.

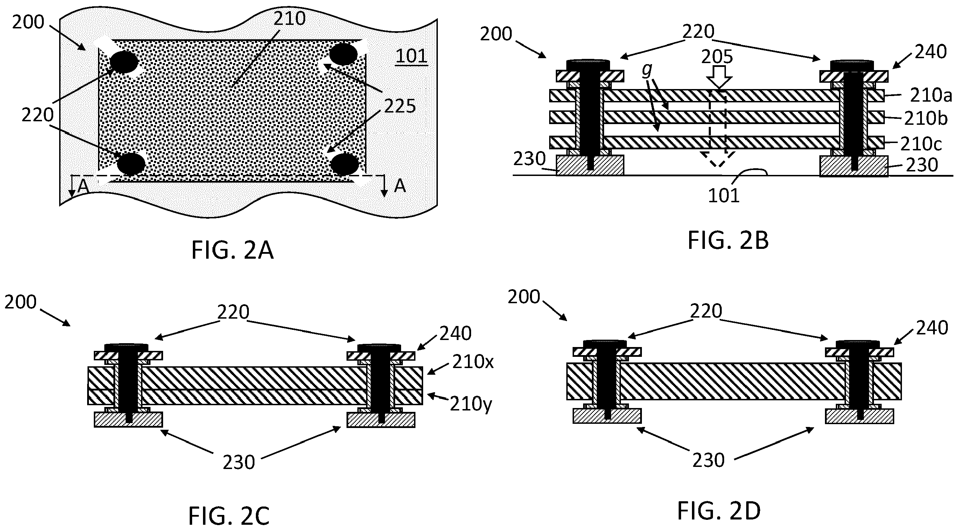

FIG. 2A shows armor 200 that is attached to a component 101 of an atmospheric suit 100 according to one or more embodiments. The component 101 may be the HUT 110, RED 120, helmet 130, or any of the other components 101 shown and discussed with reference to FIG. 1. The armor 200 includes an armor component 210 that is designed to absorb some or all of the energy of an impactor 205 that impacts the atmospheric suit 100. The armor component 210 is affixed to the component 101 via a fastener 220 (e.g., bolt). As shown, the armor component 210 may move laterally relative to the component 101 to which it is attached due to the slots 225 within which the fasteners 220 may move.

FIG. 2B is a cross-sectional view of the armor 200 through A-A according to an exemplary embodiment. The cross-sectional view reveals the fasteners 220. The armor component 210 is made up of three layers of armor component 210a, 210b, 210c in the exemplary illustration. Each layer of armor component 210 is separated from an adjacent layer by a gap g. Each of the fasteners 220 is shown with a washer 240 that may facilitate the lateral adjustment of the armor component 210 within the slots 225. While FIG. 1 indicates that the armor component 210 may move laterally relative to the component 101 of the atmospheric suit 100 to which it is attached, FIGS. 2B, 2C, and 2D clarify that axial movement of the armor component 210 is not facilitated. Instead, an impactor 205 may cause axial deflection of the armor component 210 toward a surface of the component 101, as indicated by the arrows.

The armor component 210 is separated from the component 101 by standoffs 230. As shown, each the fasteners 220 couples to (e.g., screws into) a corresponding standoff 230. The standoffs 230 may be titanium, for example, and may be bonded to the component 101 with an adhesive. The material, number of layers, and the thickness of each layer of the armor component 210 may be designed based on the expected impactors 205. Exemplary materials for the armor component 210 include a thermoplastic or a thermosetting polymer. For example, the armor component 210 may include carbon fiber, epoxy resin with carbon fiber, a composite material reinforced with carbon fiber (i.e., carbon PEEK), imide, and other fibers such as aramid, nylon, fiberglass, or other resins such as vinylster or nylon. The material, geometry, mass, and velocity of the expected impactors 205 may be used to determine the armor component 210 characteristics that will provide the desired level of protection for the component 101 of the atmospheric suit 100 to which the armor component 210 is attached. While increasing the height of standoffs 230 may increase energy absorption capability of the armor components 210, the height of the standoffs 230 may have practical limitations.

As an example of design considerations, the goal may be to design the armor component 210 such that the component 101 experiences barely visible impact damage (BVID) as a result of expected impactors 205. Alternately, the goal may be to prevent rupture of the armor component 210. In some cases, based on the component 101 to which the armor 200 is attached, for example, the armor component 210 may be designed to absorb all of the impact of an impactor 205 and avoid deflection of the armor component 210 that would result in contact between the armor component 210c and the component 101. In other cases, the armor component 210 may be designed to absorb only some of the energy from an expected impactor 205 to reduce but not prevent impact experienced by the component 101.

FIG. 2C is a cross-sectional view of the armor 200 through A-A according to an exemplary embodiment. The embodiment of the armor 200 shown in FIG. 2C includes two layers of armor component 210x, 210y that are stacked (i.e., without a gap g). The numbers of layers of the armor component 210 are not limited by the exemplary illustrations in FIGS. 2B and 2C.

FIG. 2D is a cross-sectional view of the armor 200 through A-A according to an exemplary embodiment. The embodiment of the armor 200 shown in FIG. 2D includes an armor component 210 that is fabricated as a laminate. Thus, there are no layers whose number must be specified and no determination of whether the layers are stacked (as in FIG. 2C) or arranged with gaps g therebetween (as in FIG. 2B). Like all the embodiments shown, however, the material and thickness of the armor component 210 is determined based on the expected impactors 205 and the desired level of protection for the component 101. In addition to the material and the thickness, other characteristics of the armor component 210, in any of the embodiments, may be determined. Exemplary ones of these other characteristics include local surface hardness, dynamic fracture toughness, and static fracture toughness.

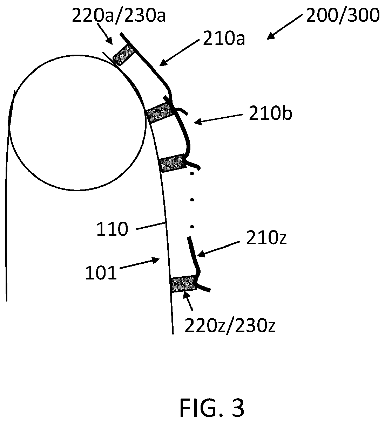

FIG. 3 shows an exemplary armor 200 that is formed as an assembly 300 of armor components 210 according to one or more embodiments. The exemplary component 101 shown for explanatory purposes is a portion of an HUT 110. The assembly 300 of armor components 210 is shown in a partially overlapping arrangement in which adjacent armor components 210 partially overlap. For example, armor component 210a partially overlaps with armor component 210b, as shown. Each armor component 210 of the assembly 300 is attached to the component 101 (i.e. the HUT 110 in the exemplary case) by one or more sets of fasteners 220 and standoffs 230). Each fastener 220 may also have a washer 240.

This assembly 300 arrangement provides protection to a larger area than could be covered by a single armor component 210 yet avoids the unprotected areas between armor components 210 that may result from a side-by-side arrangement of armor 200 according to the embodiments shown in FIGS. 2A to 2D. Simply increasing the size of a single armor component 210 to cover the area covered by the assembly 300 may not be a viable option. This is because, to provide the same energy absorption, a larger armor component 210 may have to be thicker or be made from a different material.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. Armor attached to a component of an atmospheric suit that maintains a specific atmosphere within the suit, the armor comprising:
an armor component (210) configured to absorb a predefined amount of energy; and
one or more standoffs (230) configured to attach the armor component (210) to the component such that all or most of the armor component (210) is offset from the component.

2. The armor according to claim 1, wherein the armor component (210) is a thermoplastic or a thermosetting polymer.

3. The armor according to claim 1 or 2, wherein the armor component (210) is formed as two or more layers that are stacked or that are separated by a gap therebetween, or the armor component (210) is formed as a laminate.

4. The armor according to any preceding claim, wherein the component that the armor component (210) is attached to is a hard upper torso (HUT), rear entry door (RED), or helmet.

5. The armor according to any preceding claim, wherein two or more of the one or more standoffs (230) attach the armor component (210) such that all of the armor component (210) is offset from the component, and optionally, wherein the two or more of the one or more standoffs (230) at corresponding two or more locations of the armor component (210) restrict axial movement of the armor component (210) toward or away from the component while allowing lateral movement of the armor component (210) offset from the component, and an impact of the atmospheric suit at the armor causes axial deflection of the armor component (210) toward the component.

6. The armor according to any preceding claim, further comprising an assembly of the armor components (210), wherein one of the armor components (210) is attached to the component by the one or more standoffs (230) at one side and partially overlaps another of the armor components (210) at another side.

7. The armor according to claim 6, wherein the assembly of the armor components (210) is formed as a partially overlapping stack of the armor components (210).

8. The armor according to any preceding claim, wherein the armor component (210) is configured to absorb the predefined amount of energy based on a material and thickness of the armor component (210), and optionally wherein the predefined amount of energy is determined according to a material, geometry, mass, and velocity of an expected impactor.

9. A method of assembling armor for attachment to a component of an atmospheric suit that maintains a specific atmosphere within the suit, the method comprising:
obtaining an armor component (210) configured to absorb a predefined amount of energy; and
arranging one or more standoffs (230) to attach the armor component (210) to the component such that all or most of the armor component (210) is offset from the component.

10. The method according to claim 9, wherein the armor component (210) is a thermoplastic or a thermosetting polymer.

11. The method according to claim 9 or 10, wherein the obtaining the armor component (210) includes obtaining the armor component (210) formed as two or more layers that are stacked or that are separated by a gap therebetween or obtaining the armor component (210) formed as a laminate.

12. The method according to any of claims 9 to 11, wherein the arranging the one or more standoffs (230) includes attaching the one or more standoffs (230) to a hard upper torso (HUT), rear entry door (RED), or helmet.

13. The method according to any of claims 9 to 12, wherein the arranging the one or more standoffs (230) includes arranging two or more of the one or more standoffs (230) to attach the armor component (210) such that all of the armor component (210) is offset from the component, and optionally wherein the arranging the two or more of the one or more standoffs (230) includes disposing the two or more of the one or more standoffs (230) at corresponding two or more locations of the armor component (210) to restrict axial movement of the armor component (210) toward or away from the component while allowing lateral movement of the armor component (210) offset from the component, and an impact of the atmospheric suit at the armor causes axial deflection of the armor component (210) toward the component.

14. The method according to any of claims 9 to 13, further comprising forming an assembly of the armor components (210) by attaching one of the armor components (210) to the component via the one or more standoffs (230) at one side and partially overlapping another of the armor components (210) at another side, and optionally wherein the forming the assembly of the armor components (210) includes forming a partially overlapping stack of the armor components (210).

15. The method according to any of claims 9 to 14, wherein the obtaining the armor component (210) includes selecting a material and thickness of the armor component (210) to absorb the predefined amount of energy, and optionally further comprising determining the predefined amount of energy according to a material, geometry, mass, and velocity of an expected impactor.
